**Europäisches Patentamt**

**European Patent Office**

**Office européen des brevets**

(19)

(11) Veröffentlichungsnummer : **0 199 911 B1**

# (12) EUROPÄISCHE PATENTSCHRIFT

(45) Veröffentlichungstag der Patentschrift :
26.04.89

(21) Anmeldenummer : 86101931.3

(22) Anmeldetag : 14.02.86

(51) Int. Cl.⁴ : **B 62 D 55/14**

(54) Laufrad für Kettenfahrzeuge.

(30) Priorität : 03.05.85 DE 3515918

(43) Veröffentlichungstag der Anmeldung :
05.11.86 Patentblatt 86/45

(45) Bekanntmachung des Hinweises auf die Patenterteilung : 26.04.89 Patentblatt 89/17

(84) Benannte Vertragsstaaten :
**AT BE CH DE FR GB IT LI LU NL SE**

(56) Entgegenhaltungen :
**DE–A– 2 733 307**
**DE–B– 1 201 693**

(73) Patentinhaber : **Hoesch Aktiengesellschaft**
**Eberhardstrasse 12**
**D-4600 Dortmund 1 (DE)**

(72) Erfinder : **Henke, Klaus, Dr.**
**Schoofsweg 16**
**D-4600 Dortmund (DE)**
Erfinder : **Wozniak, Johannes, Dr.**
**Moorkampstrasse 5**
**D-4780 Lippstadt 6 (DE)**

## Beschreibung

Die Erfindung betrifft ein Laufrad für Kettenfahrzeuge aus zwei, einen Führungsspalt für die Kettenzähne freilassenden Scheiben, die in einen Zylinderbereich auslaufen, mit am äußeren Umfang angebrachtem Gummibelag.

Derartige Laufräder dienen dazu, im Aufstandsbereich der Laufkette die Aufstandskraft des Kettenfahrzeuges auf die Kette zu übertragen und die Kette über die Kettenzähne zu führen.

Ein solches Laufrad ist aus der DE-B-1 201 693 bekannt. Nachteilig ergibt sich bei dem bekannten Laufrad, daß die am offenen Ende des Zylinderteils aufgebrachten Kräfte zu einem hohen Biegemoment im Übergang zwischen dem Zylinderbereich und der Scheibe des Laufrades führen. Diesen Nachteil berücksichtigend, schlägt eine Ausführungsform nach der DE-A-27 33 307 vor, die Laufrolle über eine verschweißte Bandage zu verstärken. Nachteilig bei dieser Ausführungsform ergibt sich ein äußerst korrosionsanfälliger Hohlraum zwischen Bandage und Laufradkörper. Darüber hinaus gefährden die Schweißnähte die Materialeigenschaften des hochwertigen Materials, wodurch eine Wärmebehandlung erforderlich wird.

Von daher liegt der Erfindung die Aufgabe zugrunde, die Materialspannungen jeweils im Übergang zwischen Zylinderbereich und Scheibe, hervorgerufen durch die eingeleiteten Kräfte Am offenen Ende des Zylinderbereichs bei gleichbleibender Wandstärke, zu reduzieren.

Diese Aufgabe wird erfindungsgemäß dadurch gelöst, daß im jeder Scheibe abgewandten Drittel des Zylinderbereichs eine nach innen gerichtete Umfangssicke angeordnet ist.

In einer vorteilhaften Ausbildung weist die Umfangssicke eine Tiefe von 1/8 bis 1/15 der Zylinderhöhe auf. In zweckmäßiger Weise ist die Umfangssicke durch Kaltumformung hergestellt.

Wenn davon ausgegangen wird, daß die Wandstärke der bisher bekannten Laufradausführungen so bemessen ist, daß durch die erhöhte Spannung im Übergang zwischen Zylinderbereich und Scheibe keine Überbeanspruchung des Materials erfolgte, kann durch die erfindungsgemäße Ausbildung eine Reduzierung der gesamten Wandstärke des Laufrades vorgenommen werden. Das führt neben der besseren Wirtschaftlichkeit insbesondere zu einer Gewichtsverminderung des Laufrades.

Als Bestandteil der ungefederten Massen des Laufwerkes wirkt sich eine derartige Gewichtsverminderung äußerst vorteilhaft auf die gesamte Fahrwerkkonstruktion und damit auf das Fahrverhalten des Kettenfahrzeuges aus.

Durch Kaltumformung der Sicke wird in diesem Bereich eine Kaltverfestigung des Materials erzielt, was insbesondere zur Verbesserung der Formstabilität beiträgt.

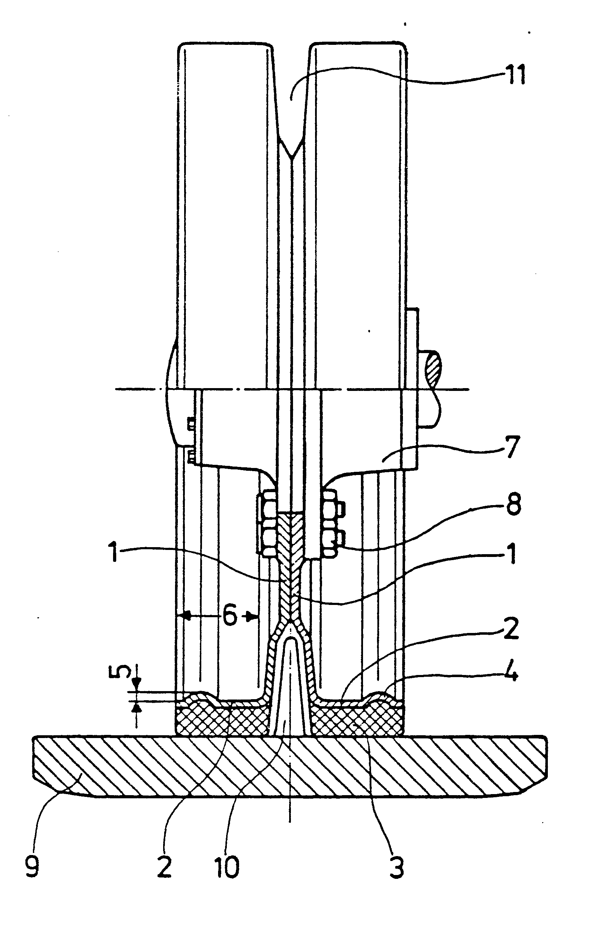

Ein Ausführungsbeispiel der Erfindung ist in der Zeichnung dargestellt und wird im folgenden näher beschrieben.

Die Zeichnung zeigt einen Teilschnitt durch ein Laufrad im Zusammenwirken mit einem Kettenglied.

Das Laufrad ist zusammengesetzt aus zwei Scheiben 1, die einen Führungsspalt 11 für die Kettenzähne 10 einer Laufkette 9 freilassen. Die Scheiben 1 laufen je in einen Zylinderbereich 2 aus. Im jeder Scheibe 1 abgewandten Drittel des Zylinderbereichs 2 ist eine nach innen gerichtete Umfangssicke 4 angeordnet. Über den gesamten Zylinderbereich 2 ist am äußeren Umfang ein Gummibelag 3, beispielsweise durch Vulkanisieren, angebracht. Das aus zwei Teilen bestehende Laufrad wird mit Verschraubungen 8 an der Laufradlagerung 7 befestigt. Im gezeigten Ausführungsbeispiel hat die Umfangssicke eine Tiefe 5 von 1/15 der Zylinderhöhe 6. Das Zusammenwirken des Laufrades mit dem Kettenglied 9 ist eindeutig erkennbar. Die Führung des Kettengliedes erfolgt durch den im Führungsspalt 11 des Laufrades befindlichen Führungszahn 10.

## Patentansprüche

1. Laufrad für Kettenfahrzeuge aus zwei, einen Führungsspalt für die Kettenzähne freilassenden Scheiben, die je in einen Zylinderbereich auslaufen, mit am äußeren Umfang angebrachtem Gummibelag, dadurch gekennzeichnet, daß im jeder Scheibe (1) abgewandten Drittel des Zylinderbereichs (2) eine nach innen gerichtete Umfangssicke (4) angeordnet ist.

2. Laufrad nach Anspruch 1, dadurch gekennzeichnet, daß die Umfangssicke (4) eine Tiefe (5) von 1/8 bis 1/15 der Zylinderhöhe (6) aufweist.

3. Laufrad nach den Ansprüchen 1 und 2, dadurch gekennzeichnet, daß die Umfangssicke (4) durch Kaltumformung hergestellt ist.

## Claims

1. Roller for tracked vehicles having two discs defining a guide space for the track links and each extending into a cylinder region, with a rubber layer upon the outer circumference, characterised in that an inwardlydirected circumferential bead (4) is provided in the onethird of the cylinder region (2) furthest from each disc (1).

2. Roller according to claim 1, characterised in that the circumferential bead (4) has a depth (5) from 1/8 to 1/15 breath (6) of the cylinder.

3. Roller according to claims 1 and 2, characterised in that the circumferential bead (4) is made by cold-forming.

## Revendications

1. Roue porteuse Pour véhicule chenillé, formée de deux disques laissant libre une fente de guidage pour les dents de la chenille, qui se terminent chacun par une zone cylindrique, avec une garniture de caoutchouc disposée à la périphérie extérieure, caractérisée en ce qu'une moulure périphérique (4), dirigée vers l'intérieur, est prévue dans le tiers de chaque zone cylindrique (2), opposé au disque (1).

2. Roue porteuse selon la revendication 1, caractérisée en ce que la moulure périphérique (4) présente une épaisseur (5) de 1/8 à 1/15 de la hauteur (6) de la zone cylindrique.

3. Roue porteuse selon les revendications 1 et 2, caractérisée en ce que la moulure périphérique (4) est produite par formage à froid.